# EUROPÄISCHE PATENTSCHRIFT

(11) **EP 0 433 986 B1**
(45) Veröffentlichungstag und Bekanntmachung des Hinweises auf die Patenterteilung: **26.06.1996**
(21) Anmeldenummer: 90124591.0
(22) Anmeldetag: 18.12.1990
(51) Int. Cl.: C08F 297/08, C08L 23/14

(54) **Verfahren zur Herstellung einer Polypropylen-Formmasse**
Process for preparing a polypropylene molding composition
Procédé de préparation d'une masse à mouler à base de polypropylène

(30) Priorität: 21.12.1989 DE 3942365
(43) Veröffentlichungstag der Anmeldung: 26.06.1991
(73) Patentinhaber: HOECHST AKTIENGESELLSCHAFT, D-65926 Frankfurt am Main (DE)
(72) Erfinder: Winter, Andreas, Dr., D-6246 Glashütten (DE); Dolle, Volker, Dr., W-6233 Kelkheim (Taunus) (DE); Rohrmann, Jürgen, Dr., W-6237 Liederbach (DE); Spaleck, Walter, Dr., W-6237 Liederbach (DE); Antberg, Martin, Dr., W-6238 Hofheim am Taunus (DE)

(56) Entgegenhaltungen:
- EP-A- 0 135 834
- EP-A- 0 405 201
- JOURNAL OF THE AMERICAN CHEMICAL SOCIETY. Bd. 110, 1988, GASTON, PA US Seiten 6255 - 6256; J.A.EWEN: 'SYNDIOSPECIFIC PROPYLENE POLYMERIZATIONS WITH GROUP 4 METALLOCENES'

## Beschreibung

Syndiotaktische Polyolefine haben den Vorteil der guten Transparenz, Flexibilität und Reißfestigkeit.

Nachteil der syndiotaktischen Polyolefine ist eine über 0 °C liegende Glastemperatur. Die Polymerformmassen zeigen bei tieferen Gebrauchstemperaturen bereits bei geringer mechnischer Belastung Sprödbruch und sie verlieren ihre Flexibilität und Reißfestigkeit völlig. Für eine Anwendung beispielsweise im Automobilbereich oder für die Verpackung tiefgekühlter Lebensmittel sind sie ungeeignet.

Aus EP 135 834 A1 ist ein Verfahren zur Herstellung einer Polypropylen-Formmasse bestehend aus
65 bis 95 Gew.-% eines Polypropylens
und 35 bis 5 Gew.-% eines Ethylen-Propylen-Copolymers
durch kontinuierliche Polymerisation in zwei Stufen im flüssigen Propylen bekannt,
wobei man
in der ersten Stufe bei einer Verweilzeit von 30 bis 180 Minuten ein kristallines Polypropylen oder durch geringe Mengen eines anderen 1-Olefins modifiziertes Polypropylen und in der zweiten Stufe bei einer Verweilzeit von 10 bis 90 Minuten in Gegenwart von 6 bis 60 Mol % Ethylen, bezogen auf das anwesende Ethylen-Propylen-Gemisch, ein Ethylen-Propylen-Copolymer herstellt, wobei man in beiden Stufen einen Mischkatalysator verwendet, welcher durch Inberührungbringen
des Reaktionsproduktes aus
   einem Umsetzungsprodukt eines Magnesiumhalogenids mit einem Elektronendonor und/oder einem Cyclopolyen und
   einer durch Reduktion von Titantetrachlorid mittels einer metallorganischen Verbindung der I. bis III. Hauptgruppe des Periodensystems entstehenden Verbindung oder
      Titantetrachlorid mit
einer halogenfreien aluminiumorganischen Verbindung und
einer Verbindung aus der Gruppe der Cyclopolyene und der aromatischen Carbonsäureester entstanden ist.

Aus EP 405 201 A2 ist eine Polypropylen-Harz-Zusammensetzung mit hoher Syndiotaktizität bekannt, die überwiegend ein Homopolymer des Propylens, wobei das Verhältnis der Intensität des Peaks, der der syndiotaktischen Bindung zugeordnet wird, zu der Summe der Intensitäten aller Peaks, die den Methylgruppen zugeordnet werden im ¹³C-NMR-Spektrum 0.7 oder mehr beträgt, und ein Copolymer von Ethylen und Propylen enthält.

Es bestand somit die die Aufgabe, einen Weg zu finden, die Glastemperatur der Polymeren abzusenken und dadurch ein auch bei tiefen Temperaturen schlagzähes und flexibles Produkt herzustellen.

Die Aufgabe konnte gelöst werden durch ein Polymer, welches aus einer Matrix aus einem überwiegend syndiotaktischem Polyolefin besteht und einen darin feindispers verteilten Kautschuk aus syndiotaktischen Polyolefinblöcken, zwischen denen jeweils mindestens ein weiteres Olefin isoliert oder in Blockform eingebaut ist. Darüber hinaus kann noch ein Homopolymer in der Kautschukphase eingemischt sein.

Die Erfindung betrifft somit ein Verfahren zur Herstellung einer Polypropylen-Formmasse bestehend aus
1) 20 bis 99 Gew.-%, bezogen auf die gesamte Formmasse, eines Polymers, welches zu 95 bis 100 Gew.-% aus syndiotaktisch angeordneten Propyleneinheiten und zu 5 bis 0 Gew.-% aus Ethyleneinheiten oder Einheiten von 1-Olefinen mit mindestens 4 C-Atomen der Formel R^{a}-CH=CH-R^{b}, worin R^{a} und R^{b} gleich oder verschieden sind und ein Wasserstoffatom oder einen Alkylrest mit 1 bis 10 C-Atomen bedeuten oder R^{a} und R^{b} mit den sie verbindenden C-Atomen einen Ring mit 4 bis 22 C-Atomen bilden, besteht (Polymer 1), und
2) 1 bis 80 Gew.-% bezogen auf die gesamte Formmasse, eines Polymers, welches zu 20 bis 90 Gew.-% aus syndiotaktisch angeordneten Propyleneinheiten und zu 10 bis 80 Gew.-% aus Ethyleneinheiten oder Einheiten von 1-Olefinen mit mindestens 4 C-Atomen der Formel R^{a}-CH=CH-R^{b}, worin R^{a} und R^{b} die obengenannte Bedeutung haben, besteht (Polymer 2),
durch Polymerisation und Copolymerisation von Propylen in mindestens zwei Stufen, in Lösung, in Suspension oder in der Gasphase, in Gegenwart eines Katalysators, welcher aus einer Übergangsmetallkomponente und einer aluminiumorganischen Verbindung besteht,
wobei, daß in der ersten Stufe 95 bis 100 Gew.-%, bezogen auf die Gesamtmenge der in der ersten Stufe eingesetzten Monomeren, Propylen und 0 bis 5 Gew.-%, bezogen auf die Gesamtmenge der Monomeren, mindestens eines Vertreters der Gruppe Ethylen und 1-Olefine mit mindestens 4 C-Atomen der Formel R^{a}-CH=CH-R^{b}, worin R^{a} und R^{b} die oben genannte Bedeutung haben, bei einer Temperatur von -40 bis 150 °C und bei einem Druck von 0,5 bis 100 bar polymerisiert werden, und in der zweiten Stufe 20 bis 90 Gew.-%, bezogen auf die Gesamtmenge der in der zweiten Stufe eingesetzten Monomeren, Propylen und 10 bis 80 Gew.-%, bezogen auf die Gesamtmenge der in der zweiten Stufe eingesetzten Monomeren, mindestens eines Vertreters der Gruppe Ethylen und Olefine mit mindestens 4 C-Atomen der Formel R^{a}-CH=CH-R^{b}, worin R^{a} und R^{b} die oben genannte Bedeutung haben, bei einer Temperatur von -40 bis 150 °C und bei einem Druck von 0,5 bis 100 bar polymerisiert werden, wobei der Katalysator aus einem Aluminoxan der Formel II 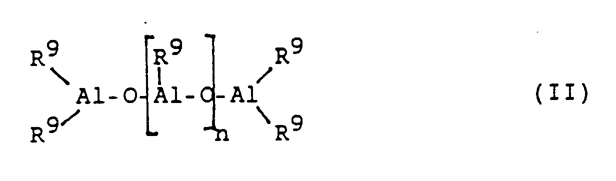 für den linearen Typ und/oder der Formel III 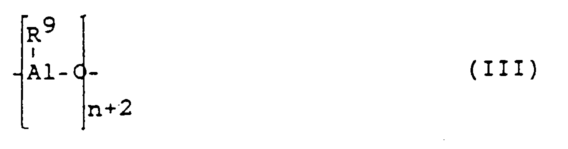 für den cyclischen Typ, wobei in den Formeln II und III R⁹ eine C₁-C₆-Alkylgruppe oder Phenyl oder Benzyl bedeutet und n eine ganze Zahl von 2 bis 50 ist, und einer Übergangsmetallkomponente der Formel I 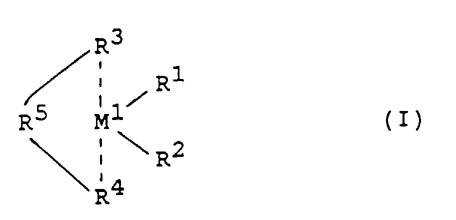 besteht, worin
- M¹: Titan, Zirkon, Hafnium, Vanadium, Niob oder Tantal ist,
- R¹ und R²: gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
- R³ und R⁴: verschieden sind und einen ein- oder mehrkernigen Kohlenwasserstoffrest, welcher mit dem Zentralatom M¹ eine Sandwichstruktur bilden kann, bedeuten,
- R⁵: 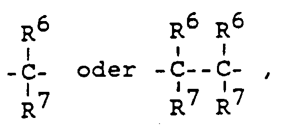 R⁶ und R⁷ gleich oder verschieden sind und R⁶ eine C₆-C₁₀ Arylgruppe ist und R⁷ ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ jeweils mit den sie verbindenden Atomen einen Ring bilden.

Der für das erfindungsgemäße Verfahren zu verwendende Katalysator besteht aus einem Aluminoxan und einem Metallocen der Formel I

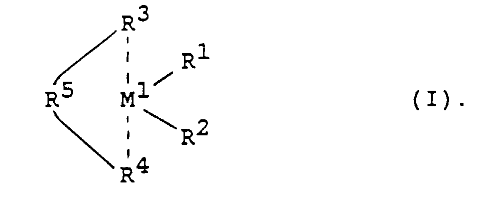

In Formel I ist M¹ ein Metall aus der Gruppe Titan, Zirkon, Hafnium, Vanadium, Niob und Tantal, vorzugsweise Zirkon und Hafnium.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ und R⁴ sind verschieden und bedeuten einen ein- oder mehrkernigen Kohlenwasserstoffrest, welcher mit dem Zentralatom M¹ eine Sandwichstruktur bilden kann.

Bevorzugt sind R³ und R⁴ Fluorenyl und Cyclopentadienyl, wobei die Grundkörper noch zusätzliche Substituenten tragen können.

R⁵ ist eine ein- oder mehrgliedrige Brücke, welche die Reste R³ und R⁴ verknüpft und bedeutet 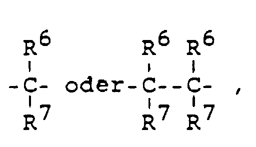 wobei R⁶ und R⁷ gleich oder verschieden sind und R⁶ eine C₆-C₁₀ Arylgruppe ist und R⁷ ein Wasserstoffatom, ein Halogenatom, vorzugsweise Chlor, eine C₁-C₁₀-, vorzugsweise C₁-C₃-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, Vorzugsweise C₂-C₄-Alkenylgruppe, eine C₇-C₄₀-vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R⁶ und R⁷ bilden jeweils zusammen mit den sie verbindenden Atomen einen Ring.

R⁵ ist vorzugsweise =CR⁶R⁷.

Die beschriebenen Metallocene können nach folgendem allgemeinen Reaktionsschema hergestellt werden: 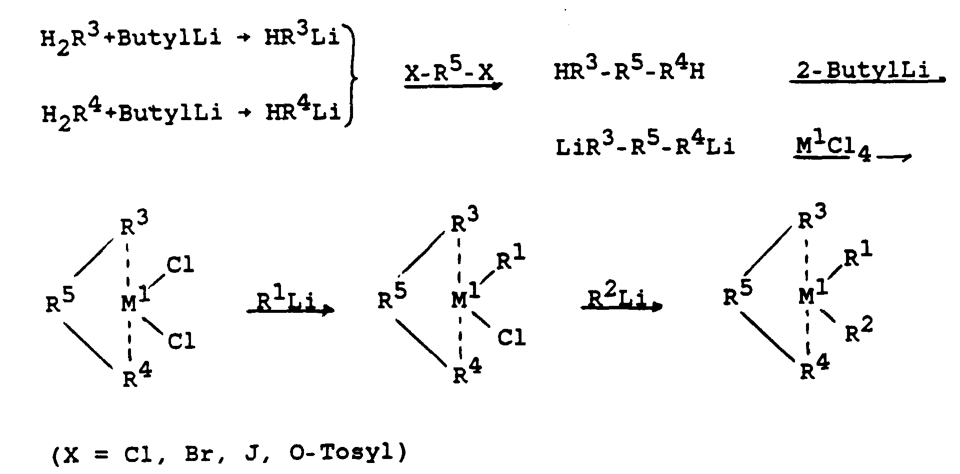 oder

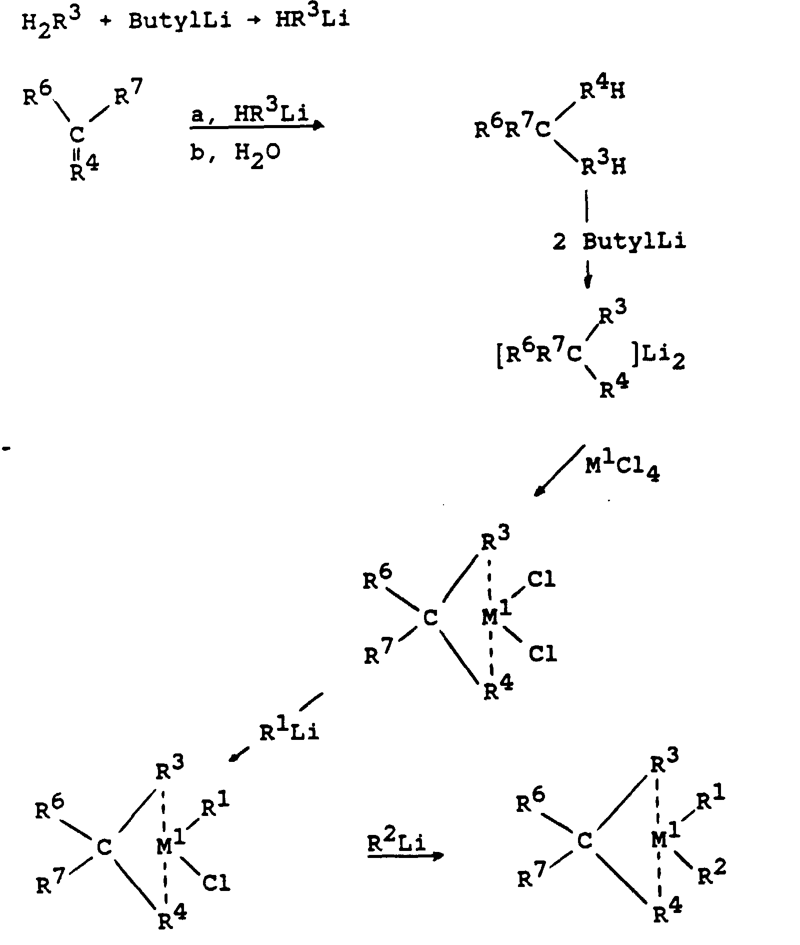

Bevorzugt eingesetzte Metallocene sind (Arylalkyliden)-(9-fluorenyl)(cyclopentadienyl)zirkondichlorid, und (Diarylmethylen)(9-fluorenyl)(cyclopentadienyl)zirkondichlorid.

Besonders bevorzugt sind dabei (Methyl(phenyl)methylen)-(9-fluorenyl)(cyclopentadienyl)zirkondichlorid und (Diphenylmethylen)(9-fluorenyl)(cyclopentadienyl)zirkondichlorid sowie die entsprechenden Hafniumanalogen.

Der Cokatalysator ist ein Aluminoxan der Formel II 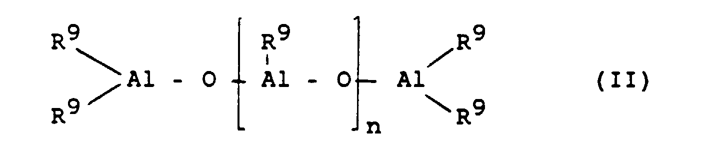 für den linearen Typ und/oder der Formel III 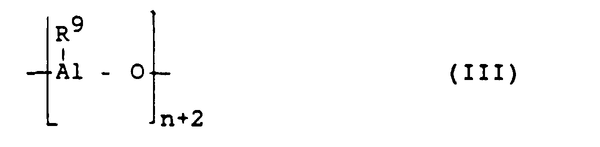 für den cyclischen Typ. In diesen Formeln bedeuten R⁹ eine C₁-C₆-Alkylgruppe, vorzugsweise Methyl, Ethyl oder Isobutyl, Butyl oder Neopentyl, oder Phenyl oder Benzyl. Besonders bevorzugt ist Methyl. n ist eine ganze Zahl von 2 bis 50, bevorzugt 5 bis 40. Die exakte Struktur des Aluminoxans ist jedoch nicht bekannt.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls, vorzugsweise Aluminiumtrimethyl, und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20°C mit soviel Aluminiumtrialkyl versetzt, daß für je 4 Al-Atome etwa 1 mol CuSO₄·5H₂O zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30°C ansteigt. Anschließend wird das im Toluol gelöste Aluminoxan von dem Kupfersulfat abfiltriert und die Lösung im Vakuum eingeengt. Es wird angenommen, daß bei diesen Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100°C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1 : 1 bis 50 : 1 - vorzugsweise 5 : 1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen Al₂(SO₄)₃·16H₂O und Al₂(SO₄)₃·18H₂O mit dem besonders hohen Kristallwassergehalt von 16 bzw. 18 mol H₂O/mol Al₂(SO₄)₃.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Unabhängig von der Art der Herstellung ist allen Aluminoxanlösungen ein wechselnder Gehalt an nicht umgesetztem Aluminiumtrialkyl, das in freier Form oder als Addukt vorliegt, gemeinsam. Dieser Gehalt hat einen noch nicht genau geklärten Einfluß auf die katalytische Wirksamkeit, der je nach eingesetzter Metallocenverbindung verschieden ist.

Es ist möglich, das Metallocen vor dem Einsatz in der Polymerisationsreaktion mit einem Aluminoxan der Formel II und/oder III vorzuaktivieren. Dadurch wird die Polymerisationsaktivität deutlich erhöht und die Kornmorphologie verbessert.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.
Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von 10⁻⁴ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Die Polymerisation wird in bekannter Weise in Lösung, in Suspension oder in der Gasphase, kontinuierlich oder diskontinuierlich, zwei- oder mehrstufig bei einer Temperatur von -40 bis 150°C, vorzugsweise -30 bis 100°C, insbesondere 0 bis 80°C, durchgeführt.

Der Gesamtdruck im Polymerisationssystem beträgt 0,5 bis 100 bar. Bevorzugt ist die Polymerisation in dem technisch besonders interessanten Druckbereich von 5 bis 60 bar. Monomere, deren Siedepunkt höher ist als die Polymerisationstemperatur, werden bevorzugt drucklos polymerisiert.

In der ersten Stufe wird ein Polymer 1 durch Polymerisation von 95 bis 100, vorzugsweise 98 bis 100 Gew.-% Propylen und 5 bis 0, vorzugsweise 2 bis 0 Gew.-% Ethylen oder einem 1-Olefin mit mindestens 4 C-Atomen der Formel R^{a}-CH=CH-R^{b} hergestellt. In dieser Formel sind R^{a} und R^{b} gleich oder verschieden und bedeuten ein Wasserstoffatom oder einen Alkylrest mit 1 bis 10 C-Atomen oder R^{a} und R^{b} bilden mit den sie verbindenden Atomen einen Ring mit 4 bis 22 C-Atomen. Beispiele für derartige 1-Olefine sind 1-Buten, 1-Hexen, 4-Methyl-1-penten, 1-Octen, Norbornen. Bevorzugt werden Ethylen, 1-Buten und 4-Methyl-1-penten.

Der Druck in der ersten Stufe beträgt 0,5 bis 100, vorzugsweise 5 bis 60 bar. Die Temperatur liegt im Bereich von -40 bis 150, vorzugsweise -30 bis 100 °C.

In der ersten Stufe werden 20 bis 99, vorzugsweise 50 bis 95 Gew.-%, bezogen auf die Gesamtmenge von Polymer 1 und Polymer 2, Polymer 1 gebildet. Dieses Polymer 1 besteht aus syndiotaktisch angeordneten Propyleneinheiten, zwischen denen Einheiten von Comonomeren angeordnet sind. Der Anteil an Propyleneinheiten beträgt 100 bis 95, vorzugsweise 100 bis 98 Gew-%, der Anteil an anderen Monomereinheiten 0 bis 5, vorzugsweise 0 bis 2 Gew.-%.

Danach wird in der zweiten Stufe durch Polymerisation von 20 bis 90 Gew.-% Propylen und 10 bis 80, vorzugsweise 15 bis 70 Gew.-% Ethylen oder einem 1-Olefin mit mindestens 4 C-Atomen der Formel R^{a}-CH=CH-R^{b}, worin R^{a} und R^{b} die schon genannte Bedeutung haben, das Polymer 2 hergestellt. Bevorzugt sind wiederum Ethylen, 1-Buten und 4-Methyl-1-penten als Comonomere.

Der Druck in der zweiten Stufe beträgt 0,5 bis 100, vorzugsweise 5 bis 60 bar. Die Temperatur liegt im Bereich von -40 bis 150, vorzugsweise -30 bis 100 °C.

In der zweiten Stufe werden 1 bis 80, vorzugsweise 5 bis 60 Gew.-%, bezogen auf die Gesamtmenge von Polymer 1 und Polymer 2, Polymer 2 gebildet. Das Polymer 2 besteht ebenfalls aus syndiotaktisch angeordneten Propyleneinheiten, zwischen denen Einheiten von Comonomeren angeordnet sind. Der Anteil an Propyleneinheiten beträgt 20 bis 90, vorzugsweise 30 bis 85 Gew.-%, der Anteil an anderen Monomereinheiten 10 bis 80, vorzugsweise 15 bis 70 Gew.-%.

Als Molmassenregler kann Wasserstoff verwendet werden.

Bedingt durch das erfindungsgemäße Verfahren ist es möglich, daß Comonomere in diesem zweiten Teil der Polymerisation nicht nur in die syndiotaktische Polypropylenkette eingebaut werden, sondern auch reine Homopolymerketten bilden.

Bei der Polymerisation wird die Metallocenverbindung in einer Konzentration, bezogen auf das Übergangsmetall, von 10⁻³ bis 10⁻⁷, vorzugsweise 10⁻⁴ bis 10⁻⁶ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁵ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol. Bevorzugt wird im flüssigen Monomeren oder in der Gasphase polymerisiert.

Wird ein inertes Lösemittel verwendet, werden die Monomeren gasförmig oder flüssig in den Reaktor dosiert. Wird ein Monomer als Suspensionsmittel verwendet, so wird das Comonomer bzw. werden die Comonomeren gasförmig oder flüssig zudosiert. Des weiteren ist es möglich, in einer Mischung verschiedener Monomeren als Suspensionsmittel zu polymerisieren, ein weiteres Monomeres kann dann flüssig oder gasförmig zudosiert werden.
Über die Polymerisationzeiten der Polymeren 1 und 2 wird die

Zusammensetzung des Copolymerproduktes gesteuert. Die Gesamtdauer der Polymerisation ist beliebig, da das erfindungsgemäß zu verwendende Katalysatorsystem einen nur geringen zeitabhängigen Abfall der Polymerisationsaktivität zeigt.

Erfindungsgemäß ist eine Polypropylen-Formmasse vorgesehen, bestehend aus
1) 20 bis 99 Gew.-%, bezogen auf die gesamte Formmasse, eines Polymers, welches zu 95 bis 100 Gew.-% aus syndiotaktisch angeordneten Propyleneinheiten und zu 5 bis 0 Gew.-% aus Ethyleneinheiten oder Einheiten von 1-Olefinen mit mindestens 4 C-Atomen der Formel R^{a}-CH=CH-R^{b}, worin R^{a} und R^{b} gleich oder verschieden sind und ein Wasserstoffatom oder einen Alkylrest mit 1 bis 10 C-Atomen bedeuten oder R^{a} und R^{b} mit den sie verbindenden C-Atomen einen Ring mit 4 bis 22 C-Atomen bilden, besteht (Polymer 1), und
2) 1 bis 80 Gew.-%, bezogen auf die gesamte Formmasse, eines Polymers, welches zu 20 bis 90 Gew.-% aus syndiotaktisch angeordneten Propyleneinheiten und zu 10 bis 80 Gew.-% aus Ethyleneinheiten oder Einheiten von 1-Olefinen mit mindestens 4 C-Atomen der Formel R^{a}-CH=CH-R^{b}, worin R^{a} und R^{b} die obengenannte Bedeutung haben, besteht (Polymer 2), das nach dem erfindungsgemäßen Verfahren erhältlich ist.

Mittels des erfindungsgemäßen Verfahrens kann eine Formmasse hergestellt werden, die nach Verarbeitung in Extrudern, Knetern oder sonstigen nach dem Stand der Technik verwendeten Maschinen zu Kunststoff-Formkörpern verarbeitet werden kann die sich durch hohe Schlagzähigkeit und Flexibilität auch bei tieferen Anwendungstemperaturen auszeichnen.

Die nachfolgenden Beispiele sollen die Erfindung erläutern.

Die Bestimmung der Eigenschaften der gemäß den nachfolgenden Beispielen hergestellten Polymeren wurde im einzelnen nach folgenden Methoden durchgeführt:

Der Schmelzindex (MFI) wurde nach DIN 53 735 gemessen und in dg. min⁻¹ angegeben.

Die Viskositätszahl VZ der Polymeren wurde an 0,1 Gew.-%igen Lösungen in Dekahydronaphthalin (Isomerengemisch) bei 135 °C in einem Kapillarviskosimeter bestimmt und in cm³/g angegeben.

Die Messung der Kugeldruckhärten (KDH) erfolgte in Anlehnung an DIn 53 456 an gepreßten Platten, die 3 h bei 120 °C unter N₂ getempert, im Laufe von 3 h abgekühlt und zum Temperaturausgleich 24 h bei 23 °C und 50 % rel.
Luftfeuchte in einer Klimakammer gelagert worden waren.

Zur Bestimmung der mechanischen Eigenschaften wurde der Schlagbiegeversuch am Normkleinstab mit V-Einkerbung (Flankenwinkel 45 °, Kerbtiefe 1,3 mm, Kerbradius 1 mm) herangezogen. Die Probekörper wurden gepreßten Platten entnommen, die nach Herstellung 24 h bei 23 °C und 50 % rel. Luftfeuchte gelagert worden waren.

Die Produktzusammensetzung wurde ¹³C-NMR-spektroskopisch ermittelt. Dabei bedeuten:
- n_{PP}: mittlere Blocklänge Polypropylen
- n_{PE}: mittlere Blocklänge Polyethylen
- n_{syn}: mittlere syndiotaktische Blocklänge
- SI: syndiotaktischer Index (SI = rr + ½mr)

Ferner bedeuten:
- VZ =: Viskositätszahl in cm³/g
- M_{w} =: Molmassengewichtsmittel in g/mol
- M_{w}/Mₙ =: Polydispersität

Die Molmassen wurden durch Gelpermeationschromatographie bestimmt, Schmelzpunkte, Kristallisationspunkte und Glasübergangstemperaturen wurden mittels DSC gemessen.

Die Fraktionierung der Produkte erfolgte durch Lösen in Decan bei 100 °C und fraktionierte Fällung mit Aceton bei Raumtemperatur. Die C₂-Gehalte der Fraktionen wurden IR-spektroskopisch ermittelt.

Alle nachfolgenden Arbeitsoperationen der Metallocensynthesen wurden unter Schutzgasatmosphäre unter Verwendung absolutierter Lösungsmittel durchgeführt.

Diphenylmethylen(9-fluorenyl)(cyclopentadienyl)zirkondichlorid

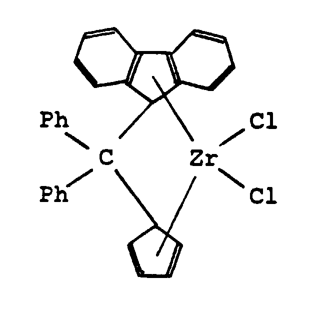

Eine Lösung von 5,10 g (30,7 mmol) Fluoren in 60 cm³ THF wurde bei Raumtemperatur mit 12,3 cm³ (30,7 mmol) einer 2,5 molaren Hexan-Lösung von n-Butyllithium langsam versetzt. Nach 40 min wurde die orange Lösung mit 7,07 g (30,7 mmol) Diphenylfulven versetzt und über Nacht gerührt. Zur dunkelroten Lösung wurden 60 cm³ Wasser zugesetzt, wobei sich die Lösung gelb färbte, und die Lösung ausgeethert. Die über MgSO₄ getrocknete Etherphase wurde eingeengt und bei -35°C der Kristallisation überlassen. Man erhielt 5,1 g (42 %) 1,1-Cyclopentadienyl-(9-fluorenyl)diphenylmethan als beiges Pulver.

2,0 g (5,0 mmol) der Verbindung wurden in 20 cm³ THF gelöst und bei 0°C mit 6,4 cm³ (10 mmol) einer 1,6 molaren Lösung von Butyllithium in Hexan versetzt. Nach 15 min Rühren bei Raumtemperatur wurde das Lösemittel abgezogen, der rote Rückstand im Ölpumpenvakuum getrocknet und mehrmals mit Hexan gewaschen. Nach dem Trocknen im Ölpumpenvakuum wurde das rote Pulver bei -78°C zu einer Suspension von 1,16 g (5,00 mmol) ZrCl₄ gegeben. Nach dem langsamen Aufwärmen wurde der Ansatz noch 2 h bei Raumtemperatur gerührt. Die rosafarbene Suspension wurde über eine G3-Fritte filtriert. Der rosarote Rückstand wurde mit 20 cm³ CH₂Cl₂ gewaschen, im Ölpumpenvakuum getrocknet und mit 120 cm³ Toluol extrahiert. Nach Abziehen des Lösemittels und Trocknen im Ölpumpenvakuum erhielt man 0,55 g des Zirkon-Komplexes in Form eines rosaroten Kristallpulvers.

Das orangerote Filtrat des Reaktionsansatzes wurde eingeeengt und bei -35°C der Kristallisation überlassen. Aus CH₂Cl₂ kristallisieren weitere 0,45 g des Komplexes. Gesamtausbeute 1,0 g (36 %). Korrekte Elementaranalysen. Das Massenspektrum zeigte M⁺ = 556. ¹H-NMR-Spektrum (100 MHz, CDCl₃); 6,90 - 8,25 (m, 16, Flu-H, Ph-H), 6,40 (m, 2, Ph-H), 6,37 (t, 2, Cp-H), 5,80 (t, 2, Cp-H).

Das Metallocen Dimethylmethylen(9-fluorenyl)(cyclopentadienyl)-zirkondichlorid wurde in Anlehnung an die Literaturstelle J. Am. Chem. Soc. 110 (1988) 6255 hergestellt.

(Phenyl(methyl)methylen)(9-fluorenyl)(cyclopentadienyl)hafniumdichlorid

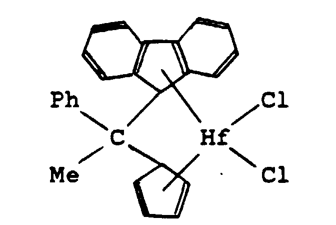

Eine Lösung von 11,4 g (67,8 mmol) 6-Methyl-6-phenyl-fulven in 40 cm³ THF wurde bei Raumtemperatur mit einer Lösung von 67,8 mmol Lithiumfluoren in 50 cm³ THF versetzt. Nach 2 h Rühren bei Raumtemperatur wurden 60 cm³ Wasser zugesetzt. Die dabei ausgefallene Substanz wurde abgesaugt, mit Diethylether gewaschen und im Ölpumpenvakuum getrocknet. Man erhielt 19,1 g (84,2 %) 2,2-Cyclopentadienyl-(9-fluorenyl)-ethylbenzol (korrekte Elementaranalysen; ¹H-NMR- Spektrum).

10,0 g (19,9 mmol) der Verbindung wurden in 60 cm³ THF gelöst und bei 0°C mit 26 cm³ (65 mmol) einer 2,5 molaren Hexan-Lösung von n-Butyllithium versetzt. Nach 15 min Rühren wurde das Lösemittel im Vakuum abgezogen. Der verbleibende dunkelrote Rückstand wurde mehrmals mit Hexan gewaschen und im Ölpumpenvakuum getrocknet. Es wurden 15,6 g des roten Dilithiosalzes als THF-Addukt erhalten; das ca. 30 % THF enthielt.

Eine Suspension von 4,78 g (14,9 mmol) HfCl₄ in 70 cm³ CH₂Cl₂ wurde mit 14,9 mmol des Dilithiosalzes umgesetzt und aufgearbeitet. Die Kristallisation bei -35 °C ergab 2,6 g (30 %) der Hafnocendichlorid-Verbindung als Kristalle. Korrekte Elementaranalyse.
¹H-NMR-Spektrum (100 MHz, CDCl₃): 7,17 - 8,20 (m, 11 Flu-H, Ph-H), 6,87 (m, 1, Ph-H), 6,12 - 6,42 (m, 3, Ph-H, Cp-H), 5,82, 5,67 (2xdd,2xl,Cp-H), 2,52 (s,3,CH₃).

### Beispiel 1 (Vergleichsbeispiel)

Ein trockener 16 dm³ Reaktor wurde mit Stickstoff gespült und mit 10 dm³ flüssigem Propylen befüllt. Dann wurden 30 cm³ toluolische Methylaluminiumoxanlösung (entsprechend 40 mmol Al, mittlerer Oligomerisierungsgrad des Methylaluminoxans 20) zugegeben und der Ansatz bei 30 °C 15 Minuten gerührt.

Parallel dazu wurden 10,4 mg (0,024 mmol) Dimethylmethylen (9-fluorenyl)(cyclopentadienyl)zirkondichlorid in 15 cm³ toluolischer Methylaluminoxanlösung (20 mmol Al) gelöst, durch 15 minütiges Stehenlassen voraktiviert und dann in den Kessel gegeben. Bei 70 °C Polymerisationstemperatur wurde zunächst 30 Minuten polymerisiert (1. Stufe, Polymer 1), dann wurde die Polymerisationstemperatur auf 50 °C abgesenkt. Durch Aufdrücken von Ethylen wurde ein Absolutdruck von 31 bar eingestellt. Während der 30-minütigen Polymerisation wurde dieser Druck durch Nachdosieren von Ethylen konstant gehalten (2. Stufe, Polymer 2). Es wurden 0,75 kg Polymer mit einem MFI 230/5 von 135 dg min⁻¹ und einer VZ von 83 cm³/g erhalten. Der Ethylengehalt des Polymers betrug 17,4 Gew.-%. Smp. = 124/134 °C, Kristp = 84 °C, T_{g} = -59,5 °C und 3,7 °C (zwei Glasübergänge, wobei der höhere Wert der syndiotaktischen Homopolymermatrix (Polymer 1) und der niedrigere Wert dem syndiotaktischen Copolymerkautschuk (Polymer 2) zugeordnet werden kann).
Der syndiotaktische Index des Polypropylenanteils betrug 94,7 %. Im Polymer 2 war das Ethylen zu 35,4'% isoliert (n_{PE}=1), zu 8,3 % mit n_{PE}=2 und zu 65,3 % blockartig (n_{PE}≥3) eingebaut, die Polypropylenblöcke hatten einen syndiotaktischen Aufbau.

### Beispiel 2 (Vergleichsbeispiel)

Es wurde verfahren wie in Beispiel 1, die Polymerisationszeiten in den Stufen 1 und 2 waren jedoch jeweils 50 Minuten und der Absolutdruck in der 2. Stufe wurde mit Ethylen auf 33 bar eigestellt und gehalten. Es wurden 1,20 kg Polymer mit einem MFI 230/5 von 203 dg min⁻¹ einer Kugeldruckhärte von 19 N mm⁻² und einer VZ von 68 cm³/g erhalten. Der Ethylengehalt des Polymers betrug 11,6 Gew.-%.
Smp. 133 °C, Kristp 101 °C, T_{g} = -55,4 °C und 4,0 °C (zwei Glasübergänge, wobei der höhere Wert der syndiotaktischen Homopolymermatrix (Polymer 1) und der niedrigere Wert dem syndiotaktischen Copolymerkautschuk (Polymer 2) zugeordnet werden kann. Der syndiotaktische Index des Polypropylenanteils betrug 94,8 %, entsprechend n_{syn} = 30. Die Kerbschlagzähigkeit bei -40 °C betrug 2,2 mJmm⁻².

### Beispiel 3

Es wurde verfahren wie in Beispiel 1, es wurden jedoch 41,9 mg (0,072 mmol) (Phenyl(methyl)methylen)(9-fluorenyl)(cyclopentadienyl)hafniumdichlorid als Metallocen eingesetzt. Die Temperatur der 1. Stufe war 50 °C, der Wasserstoffpartialdurck 0,25 bar, die Polymerisationszeit 4 Stunden. In der 2. Stufe wurde 2 Stunden bei 60 °C polymerisiert. Mit Ethylen wurde ein Absolutdruck von 38 bar eingestellt und gehalten. Es wurden 1,12 kg Polymer mit einem MFI 230/5 von 0,5 dg.min⁻¹ und einer VZ von 591 cm³/g erhalten. Der Ethylengehalt des Polymers betrug 11,5 Gew.-%.
Smp 120 °C, Kristp = 81 °C, Tg = -39,3 °C und 4,0 °C (zwei Glasübergänge, wobei der höhere Wert der syndiotaktischen Homopolymermatrix (Polymer 1) und der niedrigere Wert dem syndiotaktischen Copolymerkautschuk (Polymer 2) zugeordnet werden kann).
Der syndiotaktische Index des Polypropylenanteils betrug 97,1 %, entsprechend n_{syn} = 41. Kerbschlagzähigkeit bei 0 °C 21,9 mJmm⁻², bei -20 °C 16,2 mJmm⁻², bei -40 °C 8,5 mJmm⁻²; kein Bruch bei + 23 °C.

### Beispiel 4

Es wurde verfahren wie in Beispiel 1, es wurden jedoch 18,2 mg (0,033 mmol) Diphenylmethylen-(9-fluorenyl)-(cyclopentadienyl)zirkondichlorid als Metallocen eingesetzt. Die Temperatur der 1. Stufe war 60 °C, die Polymerisationszeit betrug 60 Minuten. In der 2. Stufe wurde 22 Minuten bei 50 °C polymerisiert, dabei mit Ethylen ein Absolutdruck von 25 bar eingestellt und während der Polymerisationszeit gehalten. Es wurden 0,92 kg Polymer mit einem MFI (230/5) von 0,4 dg·min⁻¹, einer Kugeldruckhärte von 19 N·mm⁻² und einer VZ von 372 cm³/g erhalten. Der Ethylengehalt des Polymers betrug 3,6 Gew.-%.
Smp = 134 °C, Kristp = 98 °C, T_{g} = -44,3 °C und 1,8 °C (zwei Glasübergänge, wobei der höhere Wert der syndiotaktischen Homopolymermatrix (Polymer 1) und der niedrigere Wert dem syndiotaktischen Copolymerkautschuk (Polymer 2) zugeordnet werden kann). Die Fraktionierung des Polymers ergab einen Copolymerkautschuk mit 18,3 Gew.-% C₂. Der syndiotaktische Index des Polypropylenanteils betrug 95,8 %. Kerbschlagzähigkeit bei 0 °C 19,3 mJmm⁻², bei -20 °C 13,9 mJmm⁻², bei -40 °C 5,1 mJmm⁻²; kein Bruch bei -23 °C.

### Beispiel 5

Es wurde verfahren wie in Beispiel 4, die Polymerisationszeiten in der 1. und 2. Stufe betrugen jedoch jeweils 3 h. Mit Ethylen wurde der Absolutdruck in der 2. Stufe auf 23 bar eingestellt und gehalten.
Es wurden 2,34 kg Polymer mit einem MFI 230/5 von 2,2 dg·min⁻¹ und einer VZ von 260 cm³/g erhalten.
Smp = 128 °C, Kristp = 87 °C, T_{g} = -28,9 °C und 2,4 °C (zwei Glasübergänge, wobei der höhere Wert der syndiotaktischen Homopolymermatrix (Polymer 1) und der niedrigere Wert dem syndiotaktischen Copolymerkautschuk (Polymer 2) zugeordnet werden kann). Kerbschlagzähigkeit bei -40 °C 8,9 mJmm⁻²; kein Bruch bei 0 °C und + 23 °C.
Die Fraktionierung des Polymers ergab 46,9 Gew.-% syndiotaktisches Homopolymer (Polymer 1) mit einer VZ von 340 cm³/g einem syndiotaktischen Index von 95,1 %, einem M_{w} = 485000 und M_{w}/Mₙ = 2,1 sowie 53,1 Gew.-% eines Propylen-Ethylen-Copolymeren (Polymer 2) mit einer VZ von 189 cm³/g und einem C₂-Gehalt von 21 Gew.-%.

### Beispiel 6

Es wurde verfahren wie in Beispiel 4, verwendet wurden jedoch 12,2 mg (0,02 mmol) des Metallocens. In der 2. Stufe wurde 30 Minuten bei 40 °C polymerisiert, wobei der Absolutdruck mit Ethylen auf 27 bar eingestellt und gehalten wurde.
Es wurden 0,70 kg Polymer mit einem MFI 230/5 von 0,1 dg·min⁻¹ und einer VZ von 436 cm³/g erhalten.

Der Ethylengehalt des Polymers betrug 6,9 Gew.-%. Smp = 135 °C, Kristp = 99 °C, T_{g} = -49,0 °C und 3,2 °C (zwei Glasübergänge, wobei der höhere Wert der syndiotaktischen Homopolymermatrix (Polymer 1) und der niedrigere Wert dem syndiotaktischen Copolymer-Kautschuk (Polymer 2) zugeordnet werden kann.
Der syndiotaktische Index des Polypropylenanteils betrug 96,8 %. Der aus der Fraktionierung erhaltene Copolymerkautschuk enthielt 18,5 Gew.-% Ethyleneinheiten.

### Vergleichsbeispiele A-F

Ein trockener 16 dm³-Reaktor wurde mit Stickstoff gespült und mit 10 dm³ flüssigem Propylen befüllt. Dann wurden 30 cm³ toluolische Methylaluminoxanlösung (40 mmol Al) zugegeben und 15 Minuten gerührt.
Parallel dazu wurde eines der nachstehend genannten Metallocene, die in der Lage sind, Propylen zu syndiotaktischen Polypropylen verknüpfen, in 15 cm³ toluolischer Methylaluminoxanlösung (20 mmol Al) gelöst und nach 15 Minuten in den Reaktor gegeben. Bei der in der Tabelle angegebenen Polymerisationstemperatur wurde polymerisiert. Die Glastemperaturen der so erhaltenen syndiotaktischen Homopolymeren wurden gemessen. Die bei 0 °C gemessenen Kerbschlagzähigkeiten lagen im Bereich von 1,9 bis 2,5 mJmm⁻².

| Vergleichsbeispiel | Metallocen | mg | Polym.temp. [°C] | Glastemp. T_{g} [°C]) |
|---|---|---|---|---|
| A | Dimethylmethyl-(9-fluorenyl)(cylcopentadienyl)-zirkondichlorid | 10,3 | 70 | 4,5 |
| B | | 13,9 | 60 | 3,5 |
| C | Diphenylmethylen-(9-fluorenyl)(cyclopentadienyl)-zirkondichlorid | 12,4 | 70 | 2,8 |
| D | | 11,9 | 60 | 3,2 |
| E | (Phenyl(methyl)methylen)(9-fluorenyl)(cyclopentydienyl)hafniumdichlorid | 53,0 | 60 | 3,0 |
| F | | 64,4 | 50 | 3,8 |

Die Vergleichsbeispiele belegen die ausschließlich und deutlich über 0 °C liegenden Glastemperaturen.
Die so hergestellten Polymeren zeigen bei Temperaturen unter 0 °C Sprödbruch und haben ihre Flexibilität völlig verloren. Im Gegensatz dazu besitzen die erfindungsgemäßen Formmassen noch hohe Flexibiltät und Zähigkeit, was auf die deutlich unter 0 °C liegende Glastemperatur des Polymeranteils 2 zurückzuführen ist.

## Patentansprüche

1. Verfahren zur Herstellung einer Polypropylen-Formmasse bestehend aus
1) 20 bis 99 Gew.-%, bezogen auf die gesamte Formmasse, eines Polymers, welches zu 95 bis 100 Gew.-% aus syndiotaktisch angeordneten Propyleneinheiten und zu 5 bis 0 Gew.-% aus Ethyleneinheiten oder Einheiten von 1-Olefinen mit mindestens 4 C-Atomen der Formel R^{a}-CH=CH-R^{b}, worin R^{a} und R^{b} gleich oder verschieden sind und ein Wasserstoffatom oder einen Alkylrest mit 1 bis 10 C-Atomen bedeuten oder R^{a} und R^{b} mit den sie verbindenden C-Atomen einen Ring mit 4 bis 22 C-Atomen bilden, besteht (Polymer 1), und
2) 1 bis 80 Gew.-%, bezogen auf die gesamte Formmasse, eines Polymers, welches zu 20 bis 90 Gew.-% aus syndiotaktisch angeordneten Propyleneinheiten und zu 10 bis 80 Gew.-% aus Ethyleneinheiten oder Einheiten von 1-Olefinen mit mindestens 4 C-Atomen der Formel R^{a}-CH=CH-R^{b}, worin R^{a} und R^{b} die obengenannte Bedeutung haben, besteht (Polymer 2),
durch Polymerisation und Copolymerisation von Propylen in mindestens zwei Stufen, in Lösung, in Suspension oder in der Gasphase, in Gegenwart eines Katalysators, welcher aus einer Übergangsmetallkomponente und einer aluminiumorganischen Verbindung besteht,
wobei in der ersten Stufe 95 bis 100 Gew.-%, bezogen auf die Gesamtmenge der in der ersten Stufe eingesetzten Monomeren, Propylen und 0 bis 5 Gew.-%, bezogen auf die Gesamtmenge der in der ersten Stufe engesetzten Monomeren, mindestens eines Vertreters der Gruppe Ethylen und 1-Olefine mit mindestens 4 C-Atomen der Formel R^{a}-CH=CH-R^{b}, worin R^{a} und R^{b} die obengenannte Bedeutung haben, bei einer Temperatur von -40 bis 150 °C und bei einem Druck von 0,5 bis 100 bar polymerisiert werden, und in der zweiten Stufe 20 bis 90 Gew.-%, bezogen auf die Gesamtmenge der in der zweiten Stufe eingesetzten Monomeren, Propylen und 10 bis 80 Gew.-%, bezogen auf die Gesamtmenge der in der zweiten Stufe eingesetzten Monomeren, mindestens eines Vertreters der Gruppe Ethylen und Olefine mit mindestens 4 C-Atomen der Formel R^{a}-CH=CH-R^{b}, worin R^{a} und R^{b} die oben genannte Bedeutung haben, bei einer Temperatur von -40 bis 150 °C und bei einem Druck von 0,5 bis 100 bar polymerisiert werden, wobei der Katalysator aus einem Aluminoxan der Formel II 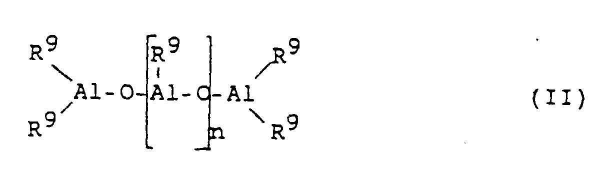 für den linearen Typ und/oder der Formel III 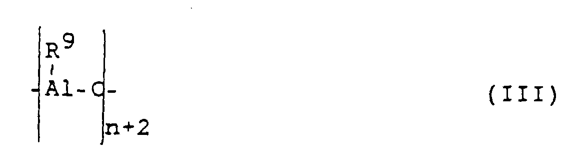 für den cyclischen Typ, wobei in den Formeln II und III R⁹ eine C₁-C₆-Alkylgruppe oder Phenyl oder Benzyl bedeutet und n eine ganze Zahl von 2 bis 50 ist, und einer Ubergangsmetallkomponente der Formel I 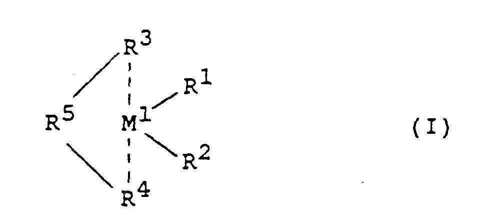 besteht, worin
M¹ Titan, Zirkon, Hafnium, Vanadium, Niob oder Tantal ist,
R¹ und R² gleich oder verschieden sind und ein Wasserstoffatom, ein Halogenatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe oder eine C₈-C₄₀-Arylalkenylgruppe bedeuten,
R³ und R⁴ verschieden sind und einen ein- oder mehrkernigen Kohlenwasserstoffrest welcher mit dem Zentralatom M¹ eine Sandwichstruktur bilden kann, bedeuten,
R⁵ 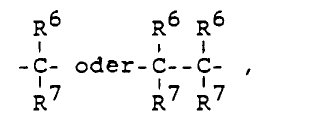 wobei R⁶ und R⁷ gleich oder verschieden sind und R⁶ eine C₆-C₁₀ Arylgruppe ist und R⁷ ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder R⁶ und R⁷ jeweils mit den sie verbindenden Atomen einen Ring bilden.

2. Polypropylen-Formmasse bestehend aus
1) 20 bis 99 Gew.-%, bezogen auf die gesamte Formmasse, eines Polymers, welches zu 95 bis 100 Gew.-% aus syndiotaktisch angeordneten Propyleneinheiten und zu 5 bis 0 Gew.-% aus Ethyleneinheiten oder Einheiten von 1-Olefinen mit mindestens 4 C-Atomen der Formel R^{a}-CH=CH-R^{b}, worin R^{a} und R^{b} gleich oder'verschieden sind und ein Wasserstoffatom oder einen Alkylrest mit 1 bis 10 C-Atomen bedeuten oder R^{a} und R^{b} mit den sie verbindenden C-Atomen einen Ring mit 4 bis 22 C-Atomen bilden, besteht (Polymer 1), und
2) 1 bis 80 Gew.-%, bezogen auf die gesamte Formmasse, eines Polymers, welches zu 20 bis 90 Gew.-% aus syndiotaktisch angeordneten Propyleneinheiten und zu 10 bis 80 Gew.-% aus Ethyleneinheiten oder Einheiten von 1-Olefinen mit mindestens 4 C-Atomen der Formel R^{a}-CH=CH-R^{b}, worin R^{a} und R^{b} die obengenannte Bedeutung haben, besteht (Polymer 2), erhältlich durch das Verfahren gemäß Anspruch 1.

3. Verwendung der Formmasse gemäß Anspruch 2 zur Herstellung von Folien und Formkörpern durch Extrusion, Spritzguß, Blasformen oder Preßsintern.

## Claims

1. A process for the preparation of a polypropylene molding composition comprising
1) 20 to 99% by weight, based on the total molding composition, of a polymer which comprises to the extent of 95 to 100% by weight syndiotactically arranged propylene units and to the extent of 5 to 0% by weight ethylene units or units of 1-olefins having at least 4 carbon atoms, of the formula R^{a}-CH=CH-R^{b}, in which R^{a} and R^{b} are identical or different and are a hydrogen atom or an alkyl radical having 1 to 10 carbon atoms, or R^{a} and R^{b} form a ring having 4 to 22 carbon atoms with the carbon atoms joining them (polymer 1), and
2) 1 to 80% by weight, based on the total molding composition, of a polymer which comprises to the extent of 20 to 90% by weight syndiotactically arranged propylene units and to the extent of 10 to 80% by weight ethylene units or units of 1-olefins having at least 4 carbon atoms, of the formula R^{a}-CH=CH-R^{b}, in which R^{a} and R^{b} have the abovementioned meaning (polymer 2),
by polymerization and copolymerization of propylene in at least two stages, in solution, in suspension or in the gas phase, in the presence of a catalyst which comprises a transition metal component and an organoaluminum compound,
95 to 100% by weight, based on the total amount of the monomers employed in the first stage, of propylene and 0 to 5% by weight, based on the total amount of the monomers employed in the first stage, of at least one representative of the group comprising ethylene and 1-olefins having at least 4 carbon atoms, of the formula R^{a}-CH=CH-R^{b}, in which R^{a} and R^{b} have the abovementioned meaning, being polymerized in the first stage at a temperature of -40 to 150°C and under a pressure of 0.5 to 100 bar, and 20 to 90% by weight, based on the total amount of the monomers employed in the second stage, of propylene and 10 to 80% by weight, based on the total amount of the monomers employed in the second stage, of at least one representative of the group comprising ethylene and olefins having at least 4 carbon atoms, of the formula R^{a}-CH=CH-R^{b}, in which R^{a} and R^{b} have the abovementioned meaning, being polymerized in the second stage at a temperature of -40 to 150°C and under a pressure of 0.5 to 100 bar, the catalyst comprising an aluminoxane of the formula II 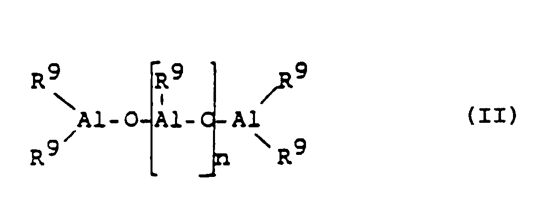 for the linear type and/or of the formula III 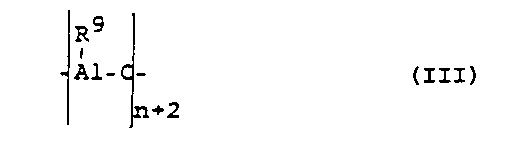 for the cyclic type, in which, in the formulae II and III, R⁹ is a C₁-C₆-alkyl group or phenyl or benzyl and n is an integer from 2 to 50, and a transition metal component of the formula I 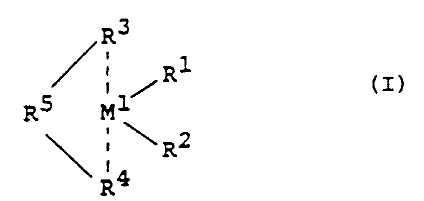 in which
M¹ is titanium, zirconium, hafnium, vanadium, niobium or tantalum,
R¹ and R² are identical or different and are a hydrogen atom, a halogen atom, a C₁-C₁₀-alkyl group, a C₁-C₁₀-alkoxy group, a C₆-C₁₀-aryl group, a C₆-C₁₀-aryloxy group, a C₂-C₁₀-alkenyl group, a C₇-C₄₀-arylalkyl group, a C₇-C₄₀-alkylaryl group or a C₈-C₄₀-arylalkenyl group,
R³ and R⁴ are different and are a mono- or polynuclear hydrocarbon radical, which can form a sandwich structure with the central atom M¹,
R⁵ is 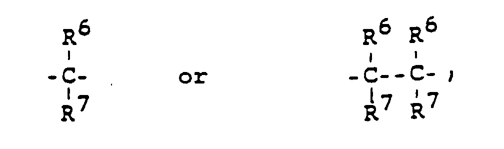 in which R⁶ and R⁷ are identical or different and R₆ is a C₆-C₁₀-aryl group and R⁷ is a hydrogen atom, a halogen atom, a C₁-C₁₀-alkyl group, a C₁-C₁₀-fluoroalkyl group, a C₆-C₁₀-fluoroaryl group, a C₆-C₁₀-aryl group, a C₁-C₁₀-alkoxy group, a C₂-C₁₀-alkenyl group, a C₇-C₄₀-arylalkyl group, a C₈-C₄₀-arylalkenyl group or a C₇-C₄₀-alkylaryl group, or R⁶ and R⁷ form a ring, in each case with the atoms joining them.

2. A polypropylene molding composition comprising
1) 20 to 99% by weight, based on the total molding composition, of a polymer which comprises to the extent of 95 to 100% by weight syndiotactically arranged propylene units and to the extent of 5 to 0% by weight ethylene units or units of 1-olefins having at least 4 carbon atoms, of the formula R^{a}-CH=CH-R^{b}, in which R^{a} and R^{b} are identical or different and are a hydrogen atom or an alkyl radical having 1 to 10 carbon atoms, or R^{a} and R^{b} form a ring having 4 to 22 carbon atoms with the carbon atoms joining them (polymer 1), and
2) 1 to 80% by weight, based on the total molding composition, of a polymer which comprises to the extent of 20 to 90% by weight syndiotactically arranged propylene units and to the extent of 10 to 80% by weight ethylene units or units of 1-olefins having at least 4 carbon atoms, of the formula R^{a}-CH=CH-R^{b}, in which R^{a} and R^{b} have the abovementioned meaning (polymer 2), obtainable by the process as claimed in claim 1.

3. The use of the molding composition as claimed in claim 2 for the production of films and shaped articles by extrusion, injection molding, blow molding or press-sintering.

## Revendications

1. Procédé pour préparer un mélange à mouler de polypropylène, constitué
1) de 20 à 99 % en poids, par rapport à la totalité du mélange à mouler, d'un polymère qui est constitué de 95 à 100 % en poids de motifs propylène à disposition syndiotactique et de 5 à 0 % en poids de motifs éthylène ou de motifs de 1-oléfines ayant au moins 4 atomes de carbone, de formule R^{a}-CH=CH-R^{b}, dans laquelle R^{a} et R^{b} sont identiques ou différents et représentent un atome d'hydrogène ou un groupe alkyle ayant de 1 à 10 atomes de carbone, ou bien R^{a} et R^{b} forment, avec les atomes de carbone qui les relient, un noyau ayant de 4 à 22 atomes de carbone (Polymère 1), et
2) de 1 à 80 % en poids, par rapport à la totalité du mélange à mouler, d'un polymère constitué de 20 à 90 % en poids de motifs propylène à disposition syndiotactique et de 10 à 80 % en poids de motifs éthylène ou de motifs de 1-oléfines ayant au moins 4 atomes de carbone, de formule R^{a}-CH=CH-R^{b}, où R^{a} et R^{b} ont les significations données ci-dessus (Polymère 2),
par polymérisation et copolymérisation de propylène en au moins deux étapes, en solution, en suspension ou en phase gazeuse, en présence d'un catalyseur qui est constitué d'un composant d'un métal de transition et d'un composé organique de l'aluminium,
et, dans la première étape, on polymérise de 95 à 100 % en poids, par rapport à la quantité totale des monomères utilisés dans la première étape, de propylène, et de 0 à 5 % en poids, par rapport à la quantité totale des monomères utilisés dans la première étape, d'au moins un représentant du groupe comprenant l'éthylène et les 1-oléfines ayant au moins 4 atomes de carbone, de formule R^{a}-CH=CH-R^{b}, où R^{a} et R^{b} ont les significations données ci-dessus, à une température de -40 à 150°C et sous une pression de 0,5 à 100 bar,
et, dans la deuxième étape, on polymérise de 20 à 90 % en poids, par rapport à la quantité totale des monomères utilisés dans la deuxième étape, de propylène, et de 10 à 80 % en poids, par rapport à la quantité totale des monomères utilisés dans la deuxième étape, d'au moins un représentant du groupe comprenant l'éthylène et les oléfines ayant au moins 4 atomes de carbone, de formule R^{a}-CH=CH-R^{b}, où R^{a} et R^{b} ont les significations données ci-dessus, à une température de -40 à 150°C et sous une pression de 0,5 à 100 bar,
où le catalyseur est constitué d'un aluminoxane de formule II 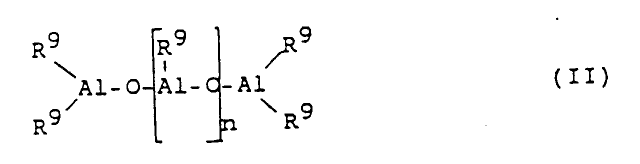 pour le type linéaire, et/ou de formule III 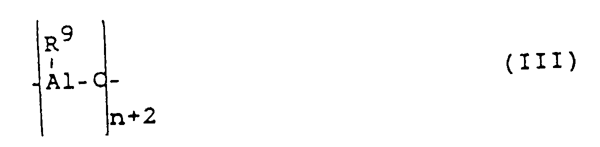 pour le type cyclique, auquel cas, dans les formules II et III, R⁹ est un groupe alkyle en C₁-C₆, ou phényle ou benzyle, et n est un nombre entier de 2 à 50, et d'un composant d'un métal de transition de formule I 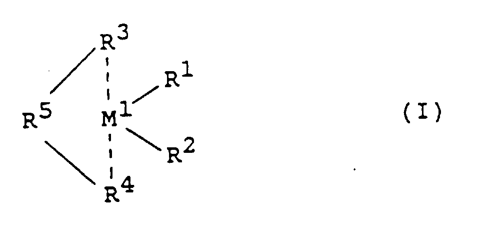 dans laquelle
M1 est le titane, le zirconium, le hafnium, le vanadium, le niobium ou le tantale,
R¹ et R² sont identiques ou différents et représentent un atome d'hydrogène, un atome d'halogène, un groupe alkyle en C₁-C₁₀, un groupe alcoxy en C₁-C₁₀, un groupe aryle en C₆-C₁₀, un groupe aryloxy en C₆-C₁₀, un groupe alcényle en C₂-C₁₀, un groupe arylalkyle en C₇-C₄₀, un groupe alkylaryle en C₇-C₄₀ ou un groupe arylalcényle en C₈-C₄₀,
R³ et R⁴ sont différents et représentent un radical hydrocarboné mono- ou polycyclique, qui avec l'atome central M¹ peut former une structure sandwich
R⁵ est 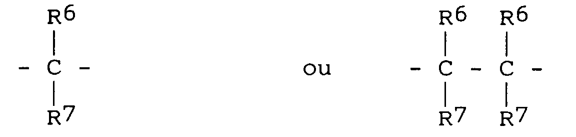 où R⁶ et R⁷ sont identiques ou différents, et R6 est un groupe aryle en C₆-C₁₀ et R⁷ est un atome d'hydrogène, un atome d'halogène, un groupe alkyle en C₁-C₁₀, un groupe fluoralkyle en C₁-C₁₀, un groupe fluoraryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, ou encore R⁶ et R⁷ forment un cycle avec les atomes qui les relient.

2. Mélange à mouler de polypropylène, constitué
1) de 20 à 99 % en poids, par rapport à la totalité du mélange à mouler, d'un polymère qui est constitué de 95 à 100 % en poids de motifs propylène à disposition syndiotactique et de 5 à 0 % en poids de motifs éthylène ou de motifs de 1-oléfines ayant au moins 4 atomes de carbone, de formule R^{a-}CH=CH-R^{b}, dans laquelle R^{a} et R^{b} sont identiques ou différents et représentent un atome d'hydrogène ou un groupe alkyle ayant de 1 à 10 atomes de carbone, ou bien R^{a} et R^{b} forment, avec les atomes de carbone qui les relient, un noyau ayant de 4 à 22 atomes de carbone (Polymère 1), et
2) de 1 à 80 % en poids, par rapport à la totalité du mélange à mouler, d'un polymère constitué de 20 à 90 % en poids de motifs propylène à disposition syndiotactique et de 10 à 80 % en poids de motifs éthylène ou de motifs de 1-oléfines ayant au moins 4 atomes de carbone, de formule R^{a}-CH=CH-R^{b}, où R^{a} et R^{b} ont les significations données ci-dessus (Polymère 2),
que l'on peut obtenir par le procédé selon la revendication 1.

3. Utilisation du mélange à mouler selon la revendication 2 pour fabriquer des feuilles et des objets moulés par extrusion, moulage par injection, moulage par soufflage ou frittage sous pression.
